# EUROPEAN PATENT SPECIFICATION

(11) **EP 2 675 758 B1**
(45) Date of publication and mention of the grant of the patent: **27.12.2017**
(21) Application number: 11719641.0
(22) Date of filing: 31.03.2011
(51) Int. Cl.: C02F 1/463, C02F 1/461, C02F 101/16

(54) **AN IMPROVED ELECTROCHEMICAL COAGULATION PROCESS FOR THE REMOVAL OF NITRATE FROM DRINKING WATER**
VERBESSERTES ELEKTROCHEMISCHES KOAGULATIONSVERFAHREN ZUR ENTFERNUNG VON NITRAT AUS TRINKWASSER
PROCÉDÉ DE COAGULATION ÉLECTROCHIMIQUE AMÉLIORÉ POUR L'ÉLIMINATION DES NITRATES DE L'EAU POTABLE

(30) Priority: 14.02.2011 IN 372DE2011
(43) Date of publication of application: 25.12.2013
(73) Proprietor: Council of Scientific & Industrial Research, New Delhi 110 001 (IN); Centre National de la Recherche Scientifique, 75794 Paris Cedex 16 (FR); Université De Poitiers, 86034 Poitiers Cedex (FR)
(72) Inventor: SUBRAMANYAN, Vasudevan, 630 006 Karaikudi Tamil Nadu (IN); EPRON, Florence, 86022 Poitiers (FR); SUBBIAH, Ravichandran, 630 006 Karaikudi Tamil Nadu (IN); GANAPATHY, Sozhan, 630 006 Karaikudi Tamil Nadu (IN); SWAMINATHAN, Mohan, 630 006 Karaikudi Tamil Nadu (IN); JOTHINATHAN, Lakshmi, 630 006 Karaikudi Tamil Nadu (IN)
(74) Representative: Graf von Stosch, Andreas
(86) International application number: PCT/IB2011/000701
(87) International publication number: WO 2012/110841

(56) References cited:
- EP-A1- 1 995 221
- WO-A1-2010/115904
- US-A1- 2010 051 542
- KUMAR N S ET AL: "Factors influencing arsenic and nitrate removal from drinking water in a continuous flow electrocoagulation (EC) process", JOURNAL OF HAZARDOUS MATERIALS, vol. 173, no. 1-3, 15 January 2010 (2010-01-15), pages 528-533, XP026782494, ELSEVIER, AMSTERDAM, NL ISSN: 0304-3894, DOI: 10.1016/J.JHAZMAT.2009.08.117 [retrieved on 2009-09-02]
- DATABASE EPODOC [Online] EUROPEAN PATENT OFFICE, THE HAGUE, NL; 7 August 2002 (2002-08-07), FAN GUOFANG: "Water purifier", XP002660365, Database accession no. CN-01264802-U -& CN 2 504 260 Y (FAN GUOFANG [CN]) 7 August 2002 (2002-08-07)

## Description

### FIELD OF THE INVENTION

The present invention relates to an improved electrochemical coagulation process for the removal of nitrate from drinking water.

Present invention further relates to an improved electrochemical coagulation process for the removal of nitrate using aluminium alloy as electrode material.

### BACKGROUND OF THE INVENTION

Nitrate contamination is a serious problem in many drinking water systems. High nitrate levels, particularly in excess of 45 ppm, in drinking water have been thought to be responsible for the incidence of "Blue Baby Syndrome" and more speculatively, for stomach cancer. The process is suitable for nitrate-affected areas like Punjab, Maharastra, Orisa, Kamataka, Tamilnadu, etc., and also for some developed countries such as France, United States for drinking water. The main advantage of the electrochemical coagulation process is it does not require any precious metal catalyst unlike the conventional electrolytic reduction process and there are no dangerous intermediate formation like nitrite, ammonia etc., during the removal process.

U.S. patent 4,956,057 discloses a process for removal of nitrates and nitrites from an aqueous solution by means of electrolytic reduction at cathode to produce a gas containing H₂, NH₃, NO and N₂O, which is then passed through a catalyst bed for reaction to produce N₂ and H₂O.

U.S. patent 5,614,078 discloses a method and apparatus for the removal of nitrates from water by electroreduction in an electrochemical flow cell consists of carbon fiber as cathode and anode.

U.S. patent 5,935,392 discloses a method and apparatus for the removal of nitrates from water by electro reduction in an electrochemical flow through or holding tank consists of iridium oxide coated carbon fiber as electrodes.

U.S. patent 5,376,240 discloses the process to remove oxynitrogn species, including nitrites and nitrates from waste water and portable water to environmentally safe nitrogen gas and ammonia by electrochemical reduction process with high surface area cathodes.

References may be made to patent US 5,614,078: wherein the authors disclose a system which reduces nitrates in marine and other aqueous systems without the formation of substances which are toxic to aquatic life. The invention includes an electrochemical flow cell consists of carbon fiber electrodes.

U.S. patent 5,306,400 discloses a method for the combined removal and destruction of nitrate ions in an electrochemical cell, which comprises of an anode compartment containing electrolyte and an anode, a cathode compartment containing electrolyte and a cathode, and a central compartment containing an anion exchange resin, separated by anion permeable membrane. The process is destroying the nitrate ions by subjecting them to reduction and oxidation reactions to form nitrogen and oxygen or water.

From the own prior art search results it is evident that there is no electrochemical coagulation process for the removal of nitrate using aluminium alloy as anode and cathode. More particularly, a simple, single step electrochemical coagulation process without the formation of any dangerous intermediates and post treatments for the removal of nitrates from drinking water by flow cell was reported.
N. Sanjeev Kumar and Sudha Goel report in "Factors influencing arsenic and nitrate removal from drinking water in a continuous flow electrocoagulation (EC) process", Journal of Hazardous Materials, 2010, a nitrate removal by electrocoagulation at potential of 10 V.

EP 1 995 221 A1 describes the removal of nitrogen contaminants with an electrocoagulation step run at current density of 1 A/dm². In order to overcome the problem associated with the prior art, there is need for more direct method of removing out nitrate without the use of precious metal catalyst, intermediate formation and external addition of any reagents. These needs are met by a continuous processing or flow-through method to remove nitrate from drinking water by an electrolytic cell with soluble anode and inert cathode to directly precipitate out the nitrate for physical removal of the precipitates from the aqueous solution.

The present technology provides an electrochemical coagulation process/cell for economical and efficient removal of nitrate from drinking water using aluminium alloy as electrode material. Since, the technology avoids the need of precious metal catalyst, addition of reagents/chemicals externally and removal problems associated therewith. Use of aluminium as electrode material for electro coagulation process is known. Pure aluminium is a well known passive metal, which reacts with the atmospheric oxygen forming an insulating layer over the surface. As anode (aluminium) in aqueous solution, it extends the same behavior more than the oxygen. Apart from the above, aluminium as a passive metal, exhibits a less dissolution than its alloys.

Following are the advantages of aluminium alloy over pure aluminium,
1. Uniform corrosion or dissolution in aqueous medium.
2. Excellent corrosion behavior in aqueous medium.
3. No formation of insulating layer on the surface of the electrode (major disadvantage for pure aluminium) during electrochemical processes.
4. High negative potential for easy dissolution.
5. Steady operating voltage during electro coagulation process.
6. High Open Circuit Potential (OCP) for the process and
7. High corrosion current in aqueous solutions.

### OBJECTIVES OF THE INVENTION

The main objective of the present invention is to provide an electrochemical coagulation process using aluminium alloy for the removal of nitrate from drinking water which obviates the drawbacks of the hitherto known prior art as detailed above. Yet another objective of the present invention is to provide a method for removing nitrate from drinking water without the use of any precious metal catalyst.

Still another objective of the present invention is to provide a method for removing nitrate from drinking water without the addition of external chemicals, without intermediate formation and without the adjustment of pH of the water.

Yet another objective of the present invention is to provide a method for removing nitrate from water whereby the drinking water may be treated in a continuous flow without interruption of the flow of the drinking water to its final destination.

Still another objective of the present invention is to provide an electrochemical coagulation process wherein the electrolytic method by itself does not give rise to any pollution of the water and atmosphere.

Yet another objective of the present invention is to provide an electrochemical coagulation process, which produces, treated water with less Total Dissolved Solids (TDS) compared with chemical method.

### SUMMARY OF THE INVENTION

Accordingly the present invention relates to an improved process for the removal of nitrates from the drinking water, using an electrochemical flow cell consisting of at least one anode and a cathode of aluminium alloy, the said process comprising of:
(i) subjecting nitrate contaminated drinking water to electrolysis in an electrochemical flow cell;
(ii) adsorption of the nitrates by aluminium hydroxide formed from the anode oxidation during electrolysis;
(iii) removal of the adsorbed nitrate by filtration.

In another aspect of the present invention the anode and cathode material used is aluminium alloy consisting of aluminium in the range of 95 - 99.5%, zinc in the range of 1-4% and indium in the range of 0.006 to 0.025%, preferably Al 97.98% , Zn 2% and In 0.02%.

### BRIEF DESCRIPTION OF THE DRAWING

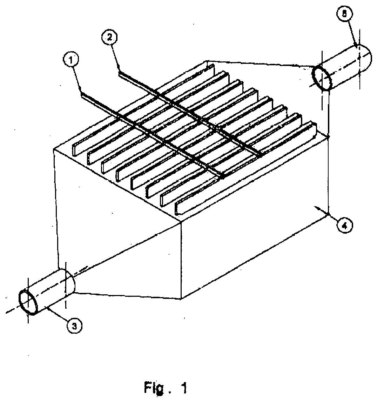

Figure 1 represents the electrochemical flow cell, in which the anodes, where the dissolution takes place, are connected to an anode bus bar (1) that serves to electrically interconnect the anode plates, maintain proper separation between electrodes of opposite polarity and maintain the relative alignment of the plates. The cathodes, where the hydrogen will be evolved for flotation, are similarly connected in cathode bus bar (2) performing a similar function. The nitrate containing water is directed from inlet pipe (3) into a cell, made of PVC (4), and the treated water is collected in the outlet pipe (5).

### DETAILED DESCRIPTION OF THE INVENTION

While the invention is susceptible to various modifications and alternative forms, specific aspect thereof has been shown by way of example and figure and will be described in detail below. It should be understood, however that it is not intended to limit the invention to the particular forms disclosed, but on the contrary, the invention is to cover all modifications, equivalents, and alternative falling within the spirit and the scope of the invention as defined by the appended claims.

The Applicants would like to mention that the examples are mentioned to show only those specific details that are pertinent to understanding the aspects of the present invention so as not to obscure the disclosure with details that will be readily apparent to those of ordinary skill in the art having benefit of the description herein.
The terms "comprises", "comprising", or any other variations thereof, are intended to cover a non-exclusive inclusion, such that a process, that comprises a list of components does not include only those components but may include other components not expressly listed or inherent to such process. In other words, one or more elements in a system or process proceeded by "comprises... a" does not, without more constraints, preclude the existence of other elements or additional elements in the system or process.
In the following detailed description of the aspects of the invention, reference is made to the accompanying drawings that form part hereof and in which are shown by way of illustration specific aspects in which the invention may be practiced. The aspects are described in sufficient details to enable those skilled in the art to practice the invention, and it is to be understood that other aspects may be utilized and that charges may be made without departing from the scope of the present invention. The following description is, therefore, not to be taken in a limiting sense, and the scope of the present invention is defined only by the appended claims.
Accordingly the present invention relates to an improved electrochemical coagulation process as defined in claim 1 for the removal of nitrate from drinking water using at least one anode and cathode of aluminium alloy, which comprises of subjecting nitrate contaminated drinking water to electrolysis in an electrochemical flow cell, aluminium hydroxide formed from the anode during electrolysis adsorbs the nitrate present in the water and removed by filtration.
In another aspect of the present invention an improved electrochemical coagulation process wherein anode and cathode material used is aluminium alloy consisting of aluminium in the range of 95 - 99.5%, zinc in the range of 1-4% and indium in the range of 0.006 to 0.025%, preferably Al 97.98% , Zn 2% and In 0.02%.
In another aspect of the present invention the drinking water containing nitrate in the range of 250 to 800 mg/l is used as the electrolyte.
In another aspect of the present invention the anodes and cathodes are in the form of sheets.
In another aspect of the present invention the anode and cathode are placed at an inter-electrode distance in the range of 0.1 to 0.2 cm.
In another aspect of the present invention the electrolysis is carried out at a pH in the range of 2-13 preferably in the range of 5-9.
In another aspect of the present invention the electrolysis is carried out at a temperature in the range of 20-80°C preferably in the range of 30- 50°C.
In another aspect of the present invention the electrolysis is carried out at an anode current density of preferably 0.1 to 0.25 A.dm⁻².
In another aspect of the present invention the electrolysis is carried out at cathode current density of preferably 0.1 to 0.25 A.dm⁻².
In yet another aspect of the present invention the final concentration of nitrate, nitrite and ammonia are in the range of 2.2 to 352 mg/l, 0.1 to 7 mg/l and 0.2 to 1.7 mg/l respectively.
In yet another aspect of the present invention the removal efficiency of nitrate is in the range of 85 to 99%.
In yet another aspect of the present invention, the electrochemical flow cell has a plurality anodes and cathodes.
In yet another aspect of the present invention, the electrochemical flow cell is fitted with anodes and cathodes, wherein the anode and cathode is aluminium alloy in the form of sheet placed at an inter electrode distance of 0.1 to 0.2 cm and anode/cathode can be quickly and easily replaced if needed. The cells may be connected in series to increase the capacity.
In still another aspect of the present invention, the overall dimensions of the electrochemical flow cell are as follows: height of about 110 mm and length in the direction of solution flow of about 256 mm and a width of about 124 mm. On passing a DC current of 0.5 A, this cell efficiently treats the water at a flow rate of about 0.5 liters/min by taking the level of 500 ppm to 14 ppm. The dimensions of the cell may be increased or decreased for higher or lower flow rates.
The present invention provides an electrochemical coagulation process for the removal of nitrate from drinking water continuously by flow cell, wherein the nitrate is removed by adsorption on metal hydroxide, formed by in-situ anodic oxidation. Accordingly, the present invention provides an electrochemical coagulation process for removal of nitrate from drinking water, which comprises subjecting nitrate, contaminated drinking water to electrolysis in an electrochemical flow cell having at least one anode and cathode of aluminium alloy.
The present invention thus provides a continuous electrolytic process to remove nitrate from neutral drinking water by the use of flow cell without further treatment such as the addition of any oxidants, without multiple intermediate reactions and without manipulating pH. The novelty of the technology is that, during the electrolysis aluminium alloy of micro-flocs are formed rapidly by anodic dissolution and immediately adsorbed the nitrate in the water and settles in the bottom.
The present invention is illustrated in Figure 1 in which the anodes, where the dissolution takes place, are connected to an anode bus bar (1) that serves to electrically interconnect the anode plates, maintain proper separation between electrodes of opposite polarity and maintain the relative alignment of the plates. The cathodes, where the hydrogen will be evolved for flotation, are similarly connected in cathode bus bar (2) performing a similar function. The nitrate containing water is directed from inlet pipe (3) into a cell, made of PVC (4), and the treated water is collected in the outlet pipe (5).
Electrochemical flow cell is fitted with anodes and cathodes, wherein the anode and cathode is aluminium alloy in the form of sheet placed at an inter electrode distance of 0.1 to 0.2 cm and anode/cathode can be quickly and easily replaced if needed. The cells may be connected in series to increase the capacity.
The overall dimensions of the electrochemical flow cell are as follows: height of about 110 mm and length in the direction of solution flow of about 256 mm and a width of about 124 mm. On passing a DC current of 0.5 A, this cell efficiently treats the water at a flow rate of about 0.5 liters/min by taking the level of 500 ppm to 14 ppm. The dimensions of the cell may be increased or decreased for higher or lower flow rates.

The electrolyte containing 250 - 800 mg/l nitrate is used as electrolyte at a pH of 2.0 to 13.0 and maintained at a temperature of 20-80°C. The current density of cathode and anode is 0.1 to 0.5 A.dm⁻².
The electrochemical coagulation process operated under the above conditions will reduce the nitrate contamination from drinking water to 14.0 mg/l with a removal efficiency of 99%.
The present invention provides an electrochemical coagulation process for the removal of nitrate from drinking water, wherein the nitrate is removed by adsorption of metal hydroxide, formed by in-situ anode oxidation.
Accordingly, the present invention provides an electrochemical coagulation process for the removal of nitrate from drinking water and electrolytic cell therefore, obviates the drawbacks of the commonly used treatment processes such as electrochemical reduction and membrane techniques, which comprises, an electrochemical flow cell fitted with aluminium alloy in sheet form as anode and cathode with an inter-electrode distance of 0.1 to 0.2 cm, and in this electrolytic cell, drinking water containing 250-800 mg/l of nitrate at a pH in the range of 2 - 13 and at a temperature between 20 - 80°C is electrolyzed at an anode current density between 0.1 - 0.5 A.dm⁻² and at a cathode current density between 0.1 - 0.5 A.dm⁻². When anode is oxidized, hydroxide will be formed. This in-situ metal hydroxide adsorbs the nitrate present in the water and settles at the bottom and removes the nitrate level to 14 mg/l.
The present invention provides an electrochemical coagulation process for the removal of nitrate from drinking water, which comprises of: subjecting nitrate contaminated drinking water to electrolysis in an electrochemical flow cell having anode and cathode of aluminium alloy. Drinking water containing nitrate of the order of 250-800 mg/l is used as the electrolyte. The electrochemical cell can have a plurality of anodes and cathodes. The anode(s) and cathode(s) are preferably fabricated in the form of sheet(s) and are placed at an inter-electrode distance of 0.1 to 0.2 cm.
Electrolysis is affected at a pH in the range of 2 to 13 and at a temperature in the range of 20 - 80°C. The current density at the anode during electrolysis is in the range of 0.1 - 0.5 A.dm⁻² and at the cathode is in the range of 0.1 - 0.5 A.dm⁻².

The nitrate contaminated drinking water containing nitrate of the order of 250-800 mg/l is effectively treated, by the method described herein above, to reduce the nitrate concentration to 14 mg/l (14 ppm) and made it for drinking.
The novelty of the present invention, resides in providing a simple, single step electrochemical coagulation process without the addition of external chemicals, for the removal of nitrate from drinking water. This process is capable of effectively reducing the nitrate concentration from drinking water to 14 mg/l from the initial concentration of 500 mg/l, with a removal efficiency of 99%.

The novelty of the present invention is that the effective removal of nitrate from drinking water is achieved by the formation of metal hydroxide by anodic dissolution in a flow cell. When anode is oxidized, hydroxide is formed; this in-situ metal hydroxide adsorbs the nitrate present in the water and removed by filtration. The non-obvious inventive step of in-situ generation of electro-coagulant in the electrolytic flow cell is effective in the removal of nitrate from drinking water and imparts the novelty to the invented technology, to reduce the nitrate contamination to 14 mg/l with a removal efficiency of 99%. Hitherto nitrate has been removed by different physico-chemical techniques, such as electrochemical reduction, reverse osmosis, electrodialysis and nanofiltration. The electrochemical coagulation process to remove nitrate by in-situ generated electro-coagulant in a flow cell with aluminium alloy, is not present in the hitherto known prior art processes.

### EXAMPLES

Following examples are given by way of illustration therefore should not be construed to limit the scope of this invention.

### EXAMPLES 1 TO EXAMPLES 11

Examples 1 to Example 11 are given in the following Table. The various operating conditions for each of the example, such as electrolyte flow rate, temperature and current density are detailed. The anode and cathode used are pure aluminium (A) or aluminium alloy (AA).

| **S.No.** | Operating conditions | 1 | 2 | 3 | 4 | 5 | 6 | 7 | 8 | 9 | 10 | 11 |
|---|---|---|---|---|---|---|---|---|---|---|---|---|
| **1** | Electrolyte flow rate (l/h) | 0.5 | 0.5 | 0.5 | 0.5 | 0.5 | 0.5 | 0.5 | 0.5 | 0.5 | 1 | 0.5 |
| **2** | Initial concentration nitrate (mg/l) | 500 | 800 | 500 | 500 | 500 | 250 | 500 | 500 | 500 | 500 | 500 |
| **3** | Final concentration nitrate | 14 | 352 | 286 | 222 | 12 | 2.2 | 72 | 199 | 252 | 86 | 73 |
| **4** | Nitrite (mg/l) | 0.17 | 7 | 2.8 | 2.1 | 0.6 | 0.1 | 3.2 | 3.7 | 4.1 | 0.89 | 3.3 |
| **5** | Ammonia (mg/l) | 0.41 | 0.75 | 1.1 | 0.8 | 0.51 | 0.2 | 1.7 | 1.2 | 1.7 | 0.74 | 1.72 |
| **6** | pH | 7 | 7 | 7 | 7 | 7 | 7 | 13 | 2 | 7 | 7 | 7 |
| **7** | Temperature (°C) | 32 | 32 | 32 | 20 | 32 | 32 | 32 | 32 | 80 | 32 | 32 |
| **8** | Anode material | AA | AA | AA | AA | AA | AA | AA | AA | AA | AA | A |
| **9** | Anode current density (A.dm-2) | 0.25 | 0.25 | 0.1 | 0.25 | 0.5 | 0.25 | 0.25 | 0.3 | 0.25 | 0.25 | 0.25 |
| **10** | Cathode material | AA | AA | AA | AA | AA | AA | AA | AA | AA | AA | A |
| **11** | Cathode current density (A.dm-2) | 0.25 | 0.25 | 0.1 | 0.25 | 0.5 | 0.25 | 0.25 | 0.3 | 0.25 | 0.25 | 0.25 |
| **12** | Current passed (A) | 0.5 | 0.5 | 0.25 | 0.5 | 1 | 0.5 | 0.5 | 0.5 | 0.5 | 0.5 | 0.5 |
| 13 | Total quantity of electricity passed (Ah) | 0.5 | 0.5 | 0.25 | 0.5 | 1 | 0.5 | 0.5 | 0.5 | 0.5 | 0.5 | 0.5 |
| 14 | Cell voltage (V) | 5.53 | 5.42 | 3.2 | 5.8 | 9.7 | 6.1 | 5.8 | 5.7 | 5.1 | 5.4 | 9.4 |
| 15 | Removal efficiency (%) | 97 | 56 | 43 | 56 | 98 | 99 | 86 | 60 | 50 | 83 | 85 |

| | | | | | | | | | | | | |
|---|---|---|---|---|---|---|---|---|---|---|---|---|
| AA ---- Aluminium Alloy (Zn 2%; In - 0.02%; remaining Al) A -----Pure aluminium | | | | | | | | | | | | |

The final concentration of contaminant (nitrate, nitrite and ammonia) is very important in all water treatment technologies and more particularly in this process. For example in the case of example 1 the concentrations of nitrate, nitrite and ammonia after treatment are 14, 0.17 and 0.41 mg/l respectively will come under maximum contamination level. (The maximum contamination levels nitrate, nitrite and ammonia are 45, 0.5 and 0.5 mg/l respectively).

The advantages of the disclosed invention are thus attained in an economical, practical, and facile manner. While preferred aspects and example configurations have been shown and described, it is to be understood that various further modifications and additional configurations will be apparent to those skilled in the art. It is intended that the specific embodiments and configurations herein disclosed are illustrative of the preferred nature and best mode of practicing the invention, and should not be interpreted as limitations on the scope of the invention.

### ADVANTAGES OF THE INVENTION

The main advantages of the electrochemical coagulation process, of the present invention, for the removal of nitrate from drinking water are:
- Remove nitrate without intermediates and produces treated water with less Total Dissolved Solids compared with conventional electrochemical reduction method.
- Requires low maintenance and minimum operator attention.
- Gas bubbles evolved in the electrochemical cell help to carry the pollutants to the top of the solution so that they can be easily removed.
- Less operating cost due to non-utilization of precious metal catalysts unlike the electrochemical reduction method.
- No pre- or post- treatment is required.
- This method provides better removal efficiency than electrochemical reduction process.
- Cost effective and highly competitive methods when compared to other physico-chemical methods.
- This electrochemical coagulation process by itself does not give rise to any pollution of the water (nitrite, ammonia, etc.,) and atmosphere.

## Claims

1. An improved electrochemical coagulation process for the removal of nitrates from the drinking water, using an electrochemical flow cell consisting of at least one anode and a cathode of aluminium alloy, the said process comprising of:
(i) subjecting nitrate contaminated drinking water to electrolysis in an electrochemical flow cell at a temperature in the range of 20-80°C;
(ii) adsorption of the nitrates by aluminium hydroxide as a coagulant formed in-situ in a flow cell by anode oxidation during electrolysis by maintaining the anode and cathode current density in the range of 0.1-0.5 A.dm⁻² for obtaining the desired drinking water;
(iii) removal of adsorbed nitrates by filtration.

2. An improved electrochemical coagulation process as claimed in claim 1, wherein anode and cathode material used is aluminium alloy consisting of aluminium in the range of 95 - 99.5%, zinc in the range of 1-4% and indium in the range of 0.006 to 0.025%, preferably A1 97.98% , Zn 2% and In 0.02%.

3. An improved electrochemical coagulation process as claimed in claim 1, wherein the drinking water containing nitrate in the range of 250 to 800 mg/l is used as the electrolyte.

4. An improved electrochemical coagulation process as claimed in claim 1, wherein the anodes and cathodes are in the form of sheets.

5. An improved electrochemical coagulation process as claimed in claim 1, wherein the anode and cathode are placed at an inter-electrode distance in the range of 0.1 to 0.2 cm.

6. An improved electrochemical coagulation process as claimed in claim 1, wherein the electrolysis is carried out at a pH in the range of 2-13 preferably in the range of 5-9.

7. An improved electrochemical coagulation process as claimed in claim 1, wherein the electrolysis is carried out at a temperature in the range of 30- 50°C.

8. An improved electrochemical coagulation process as claimed in claim 1, wherein the electrolysis is carried out at an anode current density in the range of 0.1 to 0.25 A.dm⁻².

9. An improved electrochemical coagulation process as claimed in claim 1, wherein the electrolysis is carried out at cathode current density in the range of 0.1 to 0.25 A.dm⁻².

10. An improved electrochemical coagulation process as claimed in claim 1, wherein removal efficiency of nitrate is in the range of 85 to 99%.

11. An improved electrochemical coagulation process as claimed in claim 1, wherein final concentration of nitrate, nitrite and ammonia are in the range of 2.2 to 352 mg/l, 0.1 to 7 mg/l and 0.2 to 1.7 mg/l respectively.

## Patentansprüche

1. Ein verbesserter elektrochemischer Koagulationsprozess zur Beseitigung von Nitraten aus Trinkwasser unter Verwendung einer elektrochemischen Flusszelle, bestehend aus mindestens einer Anode und einer Kathode aus einer Aluminiumlegierung, wobei dieser Prozess umfasst:
(i) Unterziehen des Nitrat-kontaminierten Trinkwassers einer Elektrolyse in einer elektrochemischen Flusszelle bei einer Temperatur im Bereich von 20-80°C;
(ii) Adsorption der Nitrate durch Aluminiumhydroxid als ein Koagulans, das in situ in der Flusszelle durch Anodenoxidation während der Elektrolyse gebildet wird durch Aufrechterhaltung der Anoden- und Kathodenstromdichte in einem Bereich von 0,1 bis 0,5 A.dm⁻² zum Erhalt des gewünschten Trinkwassers;
(iii) Beseitigen der adsorbierten Nitrate durch Filtration.

2. Ein verbesserter elektrochemischer Koagulationsprozess, wie in Anspruch 1 beansprucht, wobei das verwendete Anoden- und Kathodenmaterial eine Aluminiumlegierung ist, bestehend aus Aluminium in einem Bereich von 95 - 99,5%, Zink im Bereich von 1 - 4% und Indium im Bereich von 0,006 - 0,025%, vorzugsweise Al 97,98%, Zn 2% und In 0,02%.

3. Ein verbesserter elektrochemischer Koagulationsprozess, wie gemäß Anspruch 1 beansprucht, wobei das Trinkwasser, das das Nitrat im Bereich von 250 bis 800 mg/l enthält, als Elektrolyt verwendet wird.

4. Ein verbesserter elektrochemischer Koagulationsprozess, wie in Anspruch 1 beansprucht, wobei die Anoden und Kathoden in der Form von Platten sind.

5. Ein verbesserter elektrochemischer Koagulationsprozess, wie in Anspruch 1 beansprucht, wobei die Anode und Kathode mit einem Inter-Elektrodenabstand im Bereich von 0,1 bis 0,2 cm positioniert sind.

6. Ein verbesserter elektrochemischer Koagulationsprozess, wie in Anspruch 1 beansprucht, wobei die Elektrolyse bei einem pH-Wert im Bereich von 2 - 13, vorzugsweise im Bereich von 5 - 9, ausgeführt wird.

7. Ein verbesserter elektrochemischer Koagulationsprozess, wie in Anspruch 1 beansprucht, wobei die Elektrolyse bei einer Temperatur im Bereich von 30 - 50°C ausgeführt wird.

8. Ein verbesserter elektrochemischer Koagulationsprozess, wie in Anspruch 1 beansprucht, wobei die Elektrolyse bei einer Anodenstromdichte im Bereich von 0,1 bis 0,25 A.dm⁻² ausgeführt wird.

9. Ein verbesserter elektrochemischer Koagulationsprozess, wie in Anspruch 1 beansprucht, wobei die Elektrolyse bei einer Kathodenstromdichte im Bereich von 0,1 bis 0,25 A.dm⁻² ausgeführt wird.

10. Ein verbesserter elektrochemischer Koagulationsprozess, wie in Anspruch 1 beansprucht, wobei die Beseitigungseffizienz für das Nitrat im Bereich von 85 bis 99% liegt.

11. Ein verbesserter elektrochemischer Koagulationsprozess, wie in Anspruch 1 beansprucht, wobei die Endkonzentration des Nitrats, Nitrits bzw. Ammoniaks im Bereich von 2,2 bis 352 mg/l, 0,1 bis 7 mg/l bzw. 0,2 bis 1,7 mg/l liegt.

## Revendications

1. Procédé de coagulation électrochimique amélioré pour l'élimination des nitrates de l'eau potable, utilisant une cellule électrochimique à écoulement constitué d'au moins une anode et une cathode en alliage d'aluminium, ledit procédé comprenant :
(i) la soumission d'une eau potable contaminée par des nitrates à une électrolyse dans une cellule électrochimique à écoulement à une température située dans la plage allant de 20 à 80 °C ;
(ii) l'adsorption des nitrates par de l'hydroxyde d'aluminium en tant que coagulant formé in situ dans une cellule à écoulement par oxydation anodique pendant l'électrolyse en maintenant la densité de courant anodique et cathodique dans la plage allant de 0,1 à 0,5 A.dm⁻² pour obtenir l'eau potable souhaitée ;
(iii) l'élimination des nitrates adsorbés par filtration.

2. Procédé de coagulation électrochimique amélioré selon la revendication 1, dans lequel le matériau d'anode et de cathode utilisé est un alliage d'aluminium constitué d'aluminium dans la plage allant de 95 à 99,5 %, de zinc dans la plage allant de 1 à 4 % et d'indium dans la plage allant de 0,006 à 0,025 %, de préférence de 97,98 % d'Al, de 2 % de Zn et de 0,02 % d'In.

3. Procédé de coagulation électrochimique amélioré selon la revendication 1, dans lequel l'eau potable contenant du nitrate dans la plage allant de 250 à 800 mg/l est utilisée comme électrolyte.

4. Procédé de coagulation électrochimique amélioré selon la revendication 1, dans lequel les anodes et les cathodes sont sous la forme de feuilles.

5. Procédé de coagulation électrochimique amélioré selon la revendication 1, dans lequel l'anode et la cathode sont placées à une distance inter-électrode dans la plage allant de 0,1 à 0,2 cm.

6. Procédé de coagulation électrochimique amélioré selon la revendication 1, dans lequel l'électrolyse est réalisée à un pH situé dans la plage allant de 2 à 13 de préférence dans la plage allant de 5 à 9.

7. Procédé de coagulation électrochimique amélioré selon la revendication 1, dans lequel l'électrolyse est réalisée à une température située dans la plage allant de 30 à 50 °C.

8. Procédé de coagulation électrochimique amélioré selon la revendication 1, dans lequel l'électrolyse est réalisée à un courant de densité anodique situé dans la plage allant de 0,1 à 0,25 A.dm⁻².

9. Procédé de coagulation électrochimique amélioré selon la revendication 1, dans lequel l'électrolyse est réalisée à un courant de densité cathodique situé dans la plage allant de 0,1 à 0,25 A.dm⁻².

10. Procédé de coagulation électrochimique amélioré selon la revendication 1, dans lequel l'efficacité d'élimination du nitrate est située dans la plage allant de 85 à 99 %.

11. Procédé de coagulation électrochimique amélioré selon la revendication 1, dans lequel la concentration finale en nitrate, en nitrite et en ammoniac est située dans la plage allant de 2,2 à 352 mg/l, 0,1 à 7 mg/l et 0,2 à 1,7 mg/l respectivement.
